# EUROPEAN PATENT SPECIFICATION

(11) **EP 0 875 746 B1**
(45) Date of publication and mention of the grant of the patent: **16.11.2005**
(21) Application number: 98201291.6
(22) Date of filing: 22.04.1998
(51) Int. Cl.: G01M 3/32

(54) **Apparatus for leak testing on an access chamber system installation**
Vorrichtung zur Leckprüfung an einem Zugangsraum einer Anlage
Système pour tester l'étanchéité d'une chambre d'accès d'une installation

(30) Priority: 30.04.1997 GB 9708763; 11.08.1997 GB 9716835; 03.10.1997 US 942968
(43) Date of publication of application: 04.11.1998
(73) Proprietor: Fibresec Holdings Limited, Skipton, North Yorkshire BD23 2QR (GB)
(72) Inventor: Pardoe, Trevor, Menston, North Yorkshire LS29 6AN (GB)
(74) Representative: Browne, Robin Forsythe

(56) References cited:
- US-A- 4 685 585
- US-A- 4 754 638
- US-A- 5 297 529
- PATENT ABSTRACTS OF JAPAN vol. 008, no. 160 (M-312), 25 July 1984 & JP 59 056044 A (TOYOTA JIDOSHA KK), 31 March 1984

## Description

The present invention relates to apparatus and method primarily intended for testing the integrity of a sealed access chamber system, at any stage prior to the completion of the installation, whereby there is an opportunity to correct any faults. The apparatus and method of the present invention may also be used on an existing installation, to ensure that the installation is functioning correctly and/or to identify any faults or weaknesses in any part of the installation. This invention is designed to assist environmental issues of containing petroleum spirit (and associated vapour) within a chamber system and at the same time achieving a water free environment within said chamber.

The phrases "chamber system" or "access chamber system" are each to be interpreted as meaning any or all of access chamber itself, corbel, frame, neck or any extension piece(s), lid, suction lines or other utilities.

The installation of an access chamber involves a number of stages. Firstly, the chamber is fixed and sealed to the storage tank and this may be by one of the following:-
(a) to the neck or lid of the manway lid,
(b) to a separate upstand, or
(c) to the fill pipe and/or other pipe flanges.
Then, one or more connections have to be made through the side wall of the access chamber for supply lines, electrical cables, and other utilities, and it may also be necessary to add an extension to the chamber, all of these connections must likewise be sealed. Finally, a corbel unit may be secured and sealed to the upper region of the access chamber, and this is also secured to a frame which is seated flush with ground level (the term "access chamber installation" is to be interpreted as encompassing any or all of these components).

At any or all of these stages, faults can occur in that the respective seals are not properly made. In particular, the interior of the access chamber must be adequately sealed to contain any spillage of petroleum spirit and/or associated vapour as well as against possible ingress of water from the ground surrounding the access chamber - the pressure on the chamber due to this ground water can be considerable, particularly in winter or wet weather conditions when the water table rises.

It is therefore the aim of the present invention to provide testing apparatus for identifying problems with the various seals used in the installation, ideally prior to the various stages of backfilling and concreting when remedial action would involve re-excavation, the testing apparatus conveniently being portable and suitable for a range of both round and square chambers of varying sizes.

US-A-685585 discloses a doubled walled tank and a double walled manway system comprising means for testing the integrity of a manway system comprising connection means for making a fluid type connection with any part of the system, evacuation means for evacuating air within the system and means for monitoring the level of vacuum over a predetermined period of time.

According to a first aspect of the present invention there is provided apparatus for testing the integrity of an access chamber system during or after installation thereof according to claim 1.

Once the desired level of vacuum has been achieved, the apparatus is then sealed (by means of, for example, a one way valve). As time passes, the components of the chamber system will relax - they creep under the load applied by the vacuum. The effect of this creep is a slight reduction in vacuum which is equivalent to that which would occur due to a very small leak. Thus, the apparatus must be capable of distinguishing between vacuum reduction due to creep and that due to a small leak. This is achieved in the present invention by monitoring the vacuum level over a predetermined period of time, and from this information the rate of decay is determined and compared with data obtained from empirical tests - if the rate of decay exceeds an established value then the indicator means will show that a leak is present.

As access chambers vary in depth (deeper chambers being potentially more likely to be subjected to greater pressures from ground water), the apparatus preferably allows for one of several (typically five) different chamber depths to be selected - each setting corresponds to a different level of vacuum and corresponding monitoring time and includes an allowance built in to compensate for the effects of creep of the chamber system.

The means for monitoring the vacuum includes a vacuum sensor which feeds back the vacuum information into a dedicated micro-processor which has been pre-programmed with information relating to chamber depth, associated vacuum level, and rates of decay corresponding to specific time periods. The micro-processor interprets this information and establishes if the chamber system is sealed or if a leak is present.

Preferably the micro-processor is also programmed to detect an excessive leak, i.e failure to achieve the pre-determined vacuum level.

The output of the monitoring means is displayed on a user interface, which is preferably in the form of a visual indication panel on the apparatus itself, utilising for example LED display functions to indicate the start and end of the test and the result, the same interface also being utilised to receive user input such as selection of the chamber depth and starting the test, by means of push buttons or the like.

The apparatus may include a separate lid for placing over the access chamber (or corbel, or frame), and this lid is preferably manufactured in a range of different sizes, to suit different access chamber installations. Up to approximately 36" (91cm) square, the lid may be formed in a single piece, but for sizes larger than this it would be inconvenient to transport a single piece lid. Thus, the lid may (at least for larger sizes) comprise two panels each being hinged to a central member, such that the panels may each be pivoted about a respective axis running parallel to the longitudinal axis of the central member, between a stowed position in which the two panels are face to face, and an operative position in which the two panels are adjacent in the same plane, thereby forming the lid.

In the preferred embodiment, the evacuation means and vacuum monitoring means are remote from the lid and housed within a single control unit (which may also house the , but are linked to it by means of two separate hoses or pipes - one to apply the vacuum and the other to test the vacuum. The apparatus can then be operated remotely (i.e at least a minimum distance away from the installation) to avoid the risk of fire or explosion due to any petrol vapour which may be in the area in or around the access chamber.

Conveniently, the central member also includes handle means, whereby the lid may be placed in position by one or two operatives - additionally the lid may also include handle means to assist in the positioning and removal of the lid. Chamber sizes and shapes vary and any one size of lid will be required to function on a range of chambers and the sealing arrangement must be able to accommodate the variations.

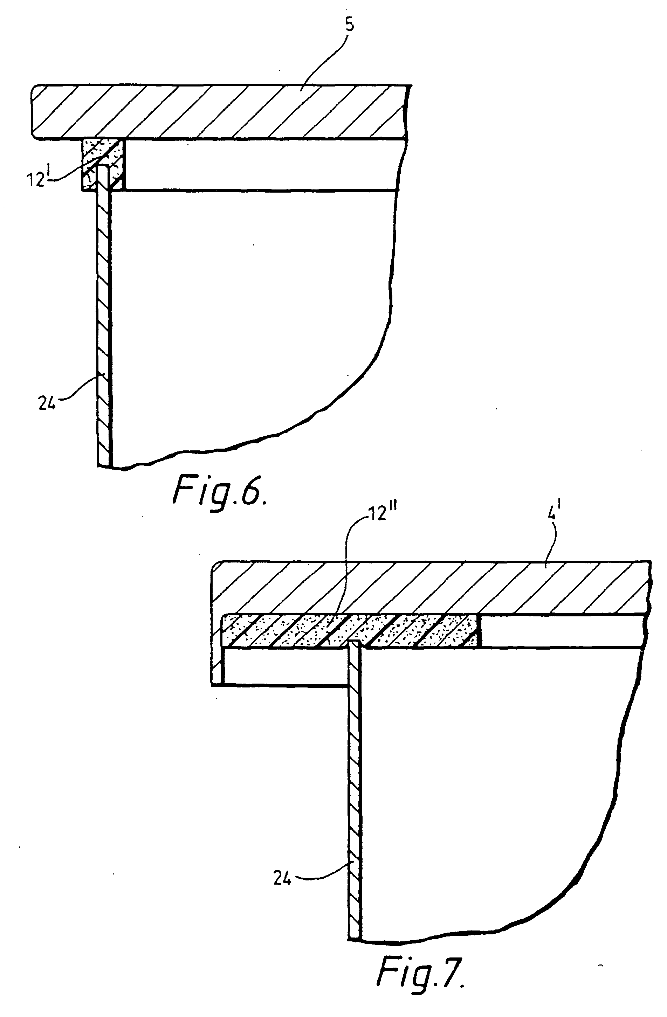

The connection of a chamber unit to a corbel or extension piece requires the use of some form of seal and in the preferred seal arrangement this seal is designed with the dual function of acting as a seal between the chamber unit and the lid for the period of testing, and on completion of the test the seal then remains in place and functions to seal the chamber unit to either a corbel unit or extension piece. An advantage of this type of seal is that during the vacuum test the integrity of the seal to the chamber unit is tested. Material for this type of seal would typically be a "Neoprene" or EPDM closed cell foam (see Figure 6).

In situations where a suitable chamber to corbel unit seal is not available a seal is fitted to the face of the lid which extends around the periphery. The top edge of a chamber unit, corbel unit or extension piece embeds into the seal and when vacuum is applied the lid is pulled down onto the chamber ensuring an air-tight seal. Material for this type of seal would typically be a "Neoprene" or EPDM closed cell foam (see Figure 7).

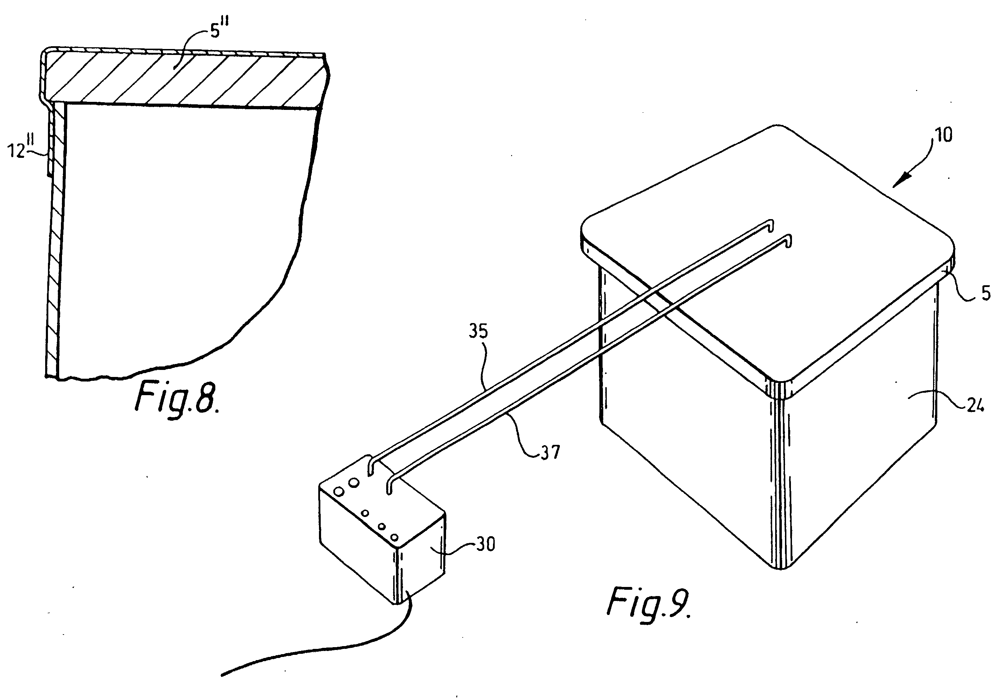

In situations where the lid outside shape corresponds very closely with the chamber unit a third type of seal can be used. A thin length of rubber strip material joined to form a continuous band is stretched over the outside of both the lid and chamber, thus encapsulating the joint. The application of vacuum draws the rubber seal tighter against the two components enhancing the seal. Material for this type of seal would typically be Nitrile rubber (see Figure 8).

In the case of the pivoted lid, the hinges are conveniently standard piano hinges. The hinged construction of this particular embodiment of the apparatus means that it may readily be collapsed into a portable unit, and then opened up on site to form a lid.

In the pivoted lid embodiment, the seal means comprises two separate seals - a first seal which extends around the periphery of the lid to form a seal with the upper edge of the access chamber or corbel unit (this first seal may take one of the two forms shown in Figures 6 and 7) and a second, thinner seal of for example Nitrile rubber in the region of the two hinges between the central member and adjacent panels.

In use, the lid is placed on top of the access chamber (or corbel unit or frame), the vacuum pump is connected to the interior of the access chamber by means of a port in the lid, and a vacuum is created by evacuating the air within the chamber - as the vacuum increases, the first seal member is drawn into even closer contact with the chamber, such that the system is effectively self-sealing, provided that the lid is reasonably well positioned to begin with. When the desired vacuum is reached (typically 120 millibars) to simulate the pressure from the surrounding ground water), it is sustained for a period of time, typically 15 minutes or thereabouts. If the vacuum is maintained during this test period, the installation, and particularly the seals, is structurally sound, but if any seal is defective or badly or incorrectly fitted, a fairly sudden loss of vacuum will occur and the appropriate remedial action can be taken.

A further method for dealing with very small leaks which may not be easily detected by a change in vacuum level is to apply a liquid penetrant dye around the outside of all joints and seals - if a small leak exists the dye is drawn into the chamber unit where it is easily observed. The lid can be fitted with one or more viewing windows which allow the inside of the chamber unit to be observed during testing - where two windows are provided this enables the user to shine a torch into one window and observe through the other window.

The installation can be tested at any time during the installation, and conveniently this would be done once all the necessary connections and seals have been made, but before completion. Or, each sealed connection can be tested separately, so that any fault can more easily be identified.

The installation can also be tested after installation, either on a routine basis or if a particular fault has arisen.

According to a second aspect of the present invention there is provided a method of testing the integrity of an access chamber during installation thereof, the method comprising the steps of connecting any part of the chamber system to evacuation means in substantially fluid-tight manner, operating the evacuation means to evacuate the air within the chamber system to provide a vacuum therein, and monitoring the level of vacuum over a predetermined period of time.

In certain situations, the chamber may be fitted with an internal sump lid and in this case it would be possible to connect the evacuation and indicator means of the apparatus directly to this internal lid, removing the need for a separate lid forming part of the apparatus. Similarly, it would be possible it certain situations to connect the evacuation and indicator means directly to one or more suction lines forming part of the chamber system, again avoiding the need for a separate lid.

Embodiments of the present invention will now be described, by way of example only, with reference to the accompanying drawings, in which:-
Figure 1 illustrates a typical access chamber installation, to which the testing apparatus of the invention may be applied,
Figure 2 illustrates the lid of the preferred embodiment of the invention, in the stowed position,
Figure 3 is an end view of the lid shown in Figure 2,
Figure 4 is a section through the lid showing in particular the construction of the central member and the hinges,
Figure 5 is a detailed drawing of the hinge,
Figure 6 is a partial section showing a first variant of the first seal means,
Figure 7 is a partial section showing a second variant of the first seal means,
Figure 8 is a partial section showing a third variant of the first seal means,
Figure 9 illustrates the single piece lid version of the remotely operated embodiment of the invention,
Figure 10 illustrated the folding lid version of the remotely operated embodiment, and
Figure 11 is a schematic illustrating the principle of operation of the apparatus.

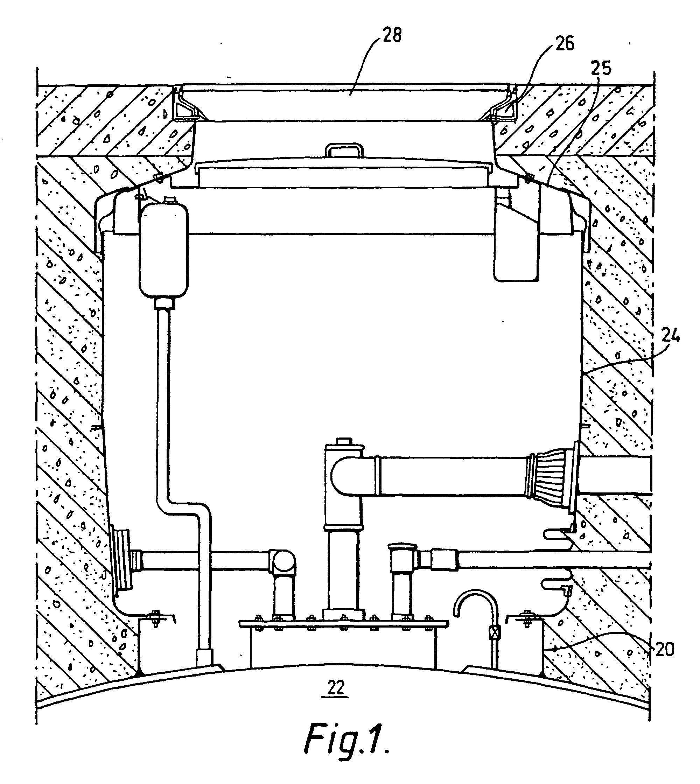

Referring to Figure 1, a sealed access chamber installation includes an upstand 20 protruding upwardly from the underground tank 22, the access chamber itself, 24, frame 26 seated flush with ground level and accommodating an access cover 28 therein, and a corbel unit 25 which is secured and sealed between the frame and the access chamber. This drawing also illustrates the various connections which all have to be made and sealed during installation, for example between the upstand 20 and the access chamber 24, between the various supply pipes and the access chamber wall, and between the corbel unit 25 and access chamber 24 and between the corbel unit 25 and frame 26. This drawing also illustrates the tank neck, manway access lid and fill pipe. Although the present invention is primarily intended to be used to test the particular installation shown in Figure 1, it should be appreciated that the invention can also be used to test any type of sealed access chamber installation.

Referring to the drawings, test apparatus 10 according to the present invention comprises two panels 4, 6 and a central member 2. The central member 2 gives structural rigidity to the apparatus and bears a central handle 2a. The vacuum pump (not shown) may be a standard vacuum pump or a venturi pump.

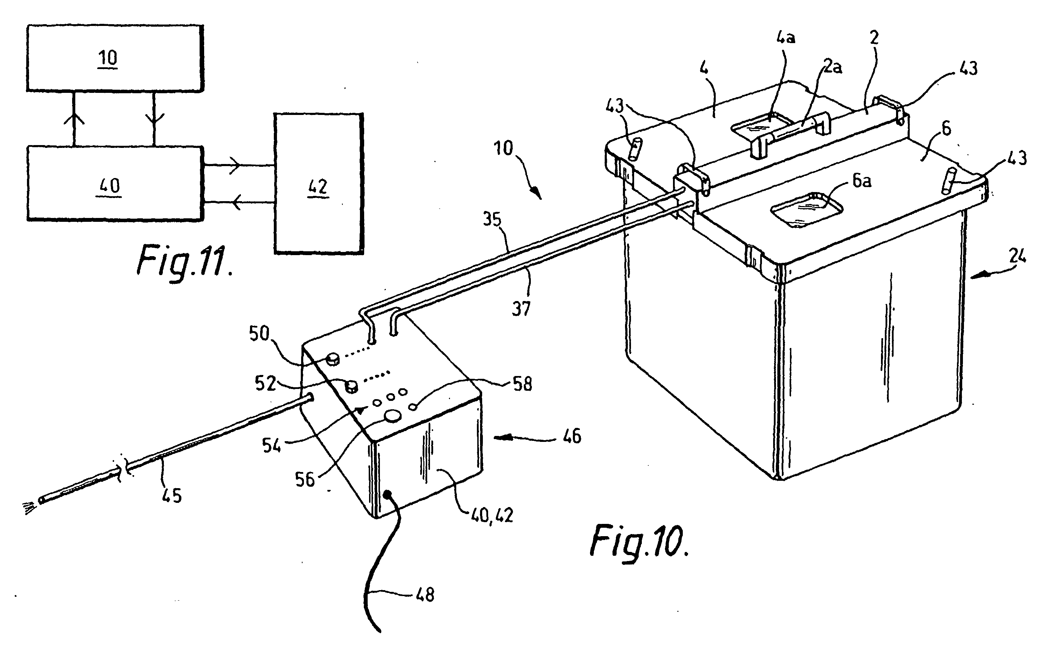

The panels 4, 6 each being skinned glass fibre panels with a central core, are hinged to the central member 2 along its respective long sides by means of one or more adapted piano hinges 8 each of which has had one arm of the two (8a, 8b) reversed. A viewing window may be incorporated into one or both panels - see 4a, 6a in Figure 10.

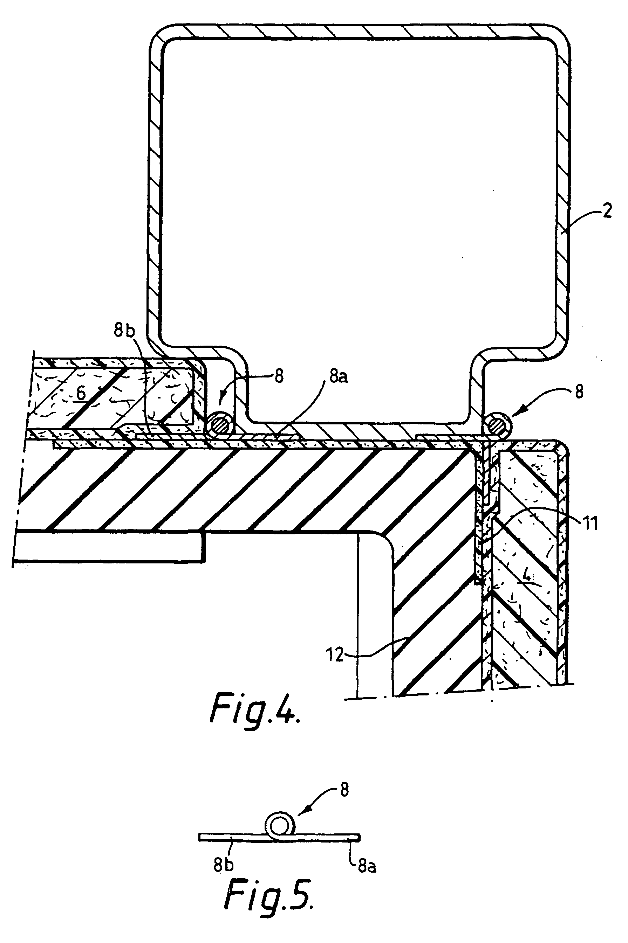

The hinge is shown in Figure 5 in the form in which it is supplied, and when one arm is reversed it appears as shown in Figure 4. One arm 8b of each hinge is glued into a corresponding slot in the base of the central member 2, and the other arm 8a is bonded and screwed to a respective panel 6 (4), the whole hinge area being sealed by a "Neoprene" closed cell foam seal 11 which is thin enough to fold when the panels 4, 6 are pivoted on hinges 8 - when folded, two latches 41 are fastened to hold the panels together.

Around the periphery of the lid formed by the two panels 4, 6 and the central member 2 there is provided a second, Nitrile rubber seal 12, approximately 20mm thick, to provide the necessary sealing engagement with the top of the access chamber.

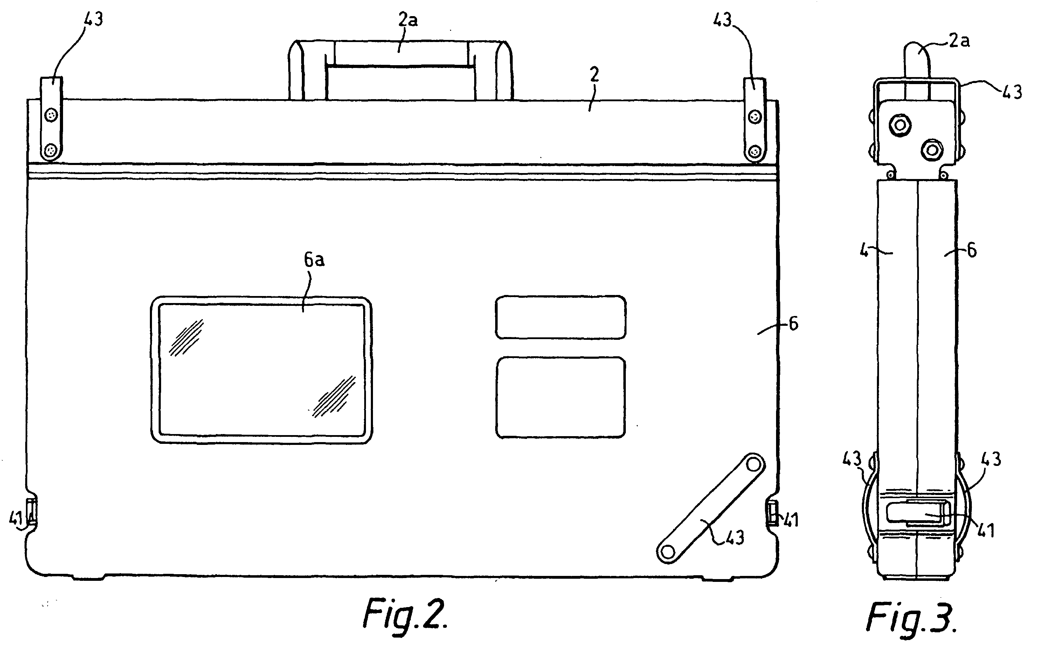

In use, the panels 4, 6 are opened out from the position shown in Figures 2 and 3 to that shown in Figure 10, the lid is placed in position over the top of the access chamber, such that seal 12 rests on the upper edge of the chamber, (or alternatively on the upper edge of the corbel or frame), and the vacuum pump (not shown) is connected to the interior of the chamber via a connection port (not shown) in the base of the central member 2. Vacuum is then applied, which pulls the lid down onto the access chamber (or corbel or frame) until seal 12 becomes substantially fluid-tight, whereupon the vacuum builds up to the desired level, typically 120 millibars which is then maintained for approximately 15 minutes. Any loss of vacuum due to faulty seals on the access chamber installation, or indeed any other reason, will be readily detected as will be described in more detail below, and the test can then be repeated after the fault or faults have been remedied.

The apparatus of the present invention provides an easily portable test kit for testing the installation prior to the final stages, namely backfilling and concreting around the complete chamber unit (including corbel unit and frame). Using the apparatus of the present invention, one can ensure that the installed access chamber will effectively contain petroleum spirit or associated vapour, which is effectively and adequately sealed against water ingress and which is also proven to withstand the maximum likely pressure exerted by the surrounding ground water.

Figures 6, 7 and 8 illustrate different variants of the seal around the edge of the lid 5, for forming the air-tight connection between the lid and the chamber. In Figure 6, a seal 12' of "Neoprene" or EPDM closed cell foam fits over the upper edge of the chamber by means of a slot provided in the seal, and serves both to provide the necessary air-tight seal with the lid 5' during testing and afterwards, may remain in place to form the seal with either a corbel unit or extension piece or a suitable lid.

In Figure 7, a second variant of the seal 12'' of "Neoprene" or EPDM closed cell foam, is relatively wide and runs around the periphery of the lid 4', the top edge of the chamber unit simply embedding into the seal 12'' as shown.

In Figure 8, a third variant of the seal 12''' simply comprises an endless band of Nitrile rubber which is stretched around and over the joint between the lid 5'', sealing the joint as vacuum is applied.

In Figure 9, the testing apparatus 10 (represented by the embodiment having a one piece lid 5 shown fitted to the chamber 24) is remote from a self contained unit 30 housing the vacuum pump, vacuum indicator/monitoring means as well as other utilities such as timers and performance monitoring. Unit 30 is installed at a minimum safe distance away from the installation, and linked to the testing apparatus 10 via respective pipes 35, 37 of the required length. Thus, any fire risk due to electrical sparking in the possible presence of petrol vapour is eliminated.

Figure 10 illustrates the preferred embodiment of the invention, comprising the hinged lid with panels 4 and 6, each incorporating a window 4a, 6a. The lid has a central structural unit 2 bearing a carrying handle 2a, and has fabric handles 43 at each end of central unit 2 and at two opposed corners of the lid. The pipes 35, 37 link the lid (shown in Fig 10 on top of the access chamber 24) to a control unit 46 comprising essentially a dedicated micro-processor 40 and user interface 42, the latter comprising a series of push buttons and LEDs - depth setting selector 50 (ranging from 0.6m to 3m), start test button 52 and associated test progress LEDs, test result display 54, emergency stop button 56 and power on LED 58, the control unit being connected to the electrical power supply by means of cable 48. A vent pipe 45 carries the evacuated air from inside the chamber (which may include fuel vapour) to be exhausted to the atmosphere at a safe distance, at least 5m away from any electrical equipment.

The function of the apparatus is illustrated schematically in Figure 11 - the selection and start test information is transmitted from user interface 42 to the microprocessor 40 which selects the appropriate test program, according to the chamber depth selected. The micro-processor then controls the operation of the evacuation means and the vacuum monitoring means (indicated generally by 10), the vacuum monitoring means then feeding the information on vacuum level back to the micro-processor which works out the rate of decay (as measured over a pre-determined period of time), compares this value with the stored empirical values, and sends the result back to the user interface 42 to be displayed accordingly on the test result LED display 54.

## Claims

1. Apparatus (10) for testing the integrity of an access chamber system (24) during or after installation thereof, the apparatus including a portable foldable lid (4,6) for making substantially fluid-tight connection with any part of the chamber system, remote evacuation means for evacuating the air within the chamber system to provide a vacuum therein, and vacuum monitoring means for monitoring the level of vacuum over a predetermined period of time, the evacuation means and the vacuum monitoring means being connected to the lid by means of hoses via a port in the lid.

2. Apparatus according to claim 1, wherein the apparatus also includes means (40) for using the vacuum monitoring information to determine a rate of vacuum decay, for comparing said rate of decay with data obtained from empirical tests and for determining as a result of said comparison at least whether or not a leak is present.

3. Apparatus according to claim 1, wherein the apparatus also includes means (50, 40) for selecting one of several different chamber depths each corresponding to a different level of vacuum and corresponding monitoring time.

4. Apparatus according to any preceding claim in which the apparatus also includes a dedicated micro-processor (40).

5. Apparatus according to claim 4 in which the vacuum monitoring means comprises a vacuum sensor adapted to feed back information into the dedicated micro-processor (40).

6. Apparatus according to claim 4 or claim 5, wherein the micro-processor is programmed to detect failure to achieve the pre-determined vacuum level.

7. Apparatus according to any preceding claim, including a user interface (42) in the form of a visual indication panel (54) for displaying the output of the vacuum monitoring means.

8. Apparatus according to any preceding claim wherein the lid (4,6) is manufactured in a range of different sizes, to suit different access chamber installations.

9. Apparatus according to any preceding claim wherein the lid (5) is formed in a single piece.

10. Apparatus according to any of claims 1 to 9, wherein the lid comprises two panels (4,6) each being hinged by means of hinges (8) to a central member (2), such that the panels may each be privoted about a respective axis running parallel to the longitudinal axis of the central member, between a stowed position in which the two panels are face to face, and an operative position in which the two panels are adjacent in a same plane.

11. Apparatus according to claim 10, wherein the central member also includes handle means (2a).

12. Apparatus according to claims 10 or 11, wherein the hinges are standard piano hinges (8).

13. Apparatus according to any of claims 10 to 12, wherein the lid also includes seal means (11,12) comprising two separate seals, a first seal (12) which extends around the periphery of the lid to form a seal with the upper edge of the access chamber system and a second, seal (11) in the region of the hinges between the central member and adjacent panels.

14. Apparatus according to any preceding claim, wherein the lid is fitted with one or more viewing windows (4a, 6a) which allow the inside of the chamber system to be observed during testing.

## Patentansprüche

1. Vorrichtung (10) zum Prüfen der Unversehrtheit eines Zugangskammersystems (24) während oder nach seiner Installation, wobei die Vorrichtung einen tragbaren, zusammenklappbaren Deckel (4, 6) zum Herstellen einer im Wesentlichen fluiddichten Verbindung mit irgendeinem Teil des Kammersystems, eine Fernevakuierungseinrichtung zum Evakuieren der Luft in dem Kammersystem, um darin ein Vakuum vorzuschen, und eine Vakuumüberwachungseinrichtung zum Überwachen des Vakuumniveaus über eine vorbestimmte Zeitdauer enthält, wobei die Evakuierungseinrichtung und die Vakuumüberwachungseinrichtung mit dem Deckel mittels Schläuchen über eine Öffnung im Deckel verbunden sind.

2. Vorrichtung nach Anspruch 1, wobei die Vorrichtung auch eine Einrichtung (40) zum Verwenden der Vakuumüberwachungsinformationen, um eine Vakuumabnahmerate zu bestimmen, zum Vergleichen der Abnahmerate mit von empirischen Tests erhaltenen Daten und zum Bestimmen als Ergebnis des Vergleichs wenigstens, ob ein Leck vorhanden ist oder nicht, enthält.

3. Vorrichtung nach Anspruch 1, wobei die Vorrichtung auch eine Einrichtung (50, 40) zum Auswählen einer von mehreren verschiedenen Kammertiefen, die jeweils einem unterschiedlichen Vakuumniveau entsprechen, und einer entsprechenden Überwachungszeit enthält.

4. Vorrichtung nach irgendeinem vorherigen Anspruch, bei welcher die Vorrichtung auch einen speziellen Mikroprozessor (40) enthält.

5. Vorrichtung nach Anspruch 4, bei welcher die Vakuumüberwachungseinrichtung einen Vakuumsensor aufweist, der ausgebildet ist, um Informationen in den speziellen Mikroprozessor (40) zurückzuführen.

6. Vorrichtung nach Anspruch 4 oder 5, bei welcher der Mikroprozessor programmiert ist, um einen Fehler beim Erreichen des vorbestimmten Vakuumniveaus zu erfassen.

7. Vorrichtung nach irgencleinem vorherigen Anspruch, mit einer Benutzerschnitt stelle (42) in der Form einer optischen Anzeigetafel (54) zum Anzeigen des Ausgangs der Vakuumüberwachungseinrichtung.

8. Vorrichtung nach irgendeinem vorherigen Anspruch, bei welcher der Deckel (4, 6) in einem Bereich von unterschiedlichen Größen hergestellt ist, um zu verschiedenen Zugangskammerinstallationen zu passen.

9. Vorrichtung nach irgendeinem vorherigen Anspruch, bei welcher der Deckel (5) in einem einzigen Stück ausgebildet ist.

10. Vorrichtung nach einem der Ansprüche 1 bis 9, bei welcher der Deckel zwei Tafeln (4, 6) aufweist, die jeweils mittels Scharnieren (8) an einem Zentralelement (2) angelenkt sind, sodass die Tafeln jeweils um eine jeweilige Achse, die parallel zur Längsachse des Zentralelements verläuft, zwischen einer verstauten Stellung, in welcher die zwei Tafeln aneinander liegen, und einer Arbeitsstellung, in welcher die zwei Tafeln in einer gleichen Ebene nebeneinander liegen, geschwenkt werden können.

11. Vorrichtung nach Anspruch 10, bei welcher das Zentralelement auch eine Griffeinrichtung (2a) enthält.

12. Vorrichtung nach Anspruch 10 oder 11, bei welcher die Scharniere Standard-Stangenscharniere (8) sind.

13. Vorrichtung nach einem der Ansprüche 10 bis 12, bei weicher der Deckel auch eine Dichtungseinrichtung (11, 12) mit zwei separaten Dichtungen enthält, eine erste Dichtung (12), die sich um den Umfang des Deckels erstreckt, um eine Dichtung mit der Oberkante des Zugangskammersystems zu bilden, und eine zweite Dichtung (11) im Bereich der Scharniere zwischen dem Zentralelement und den nebeneinander liegenden Tateln.

14. Vorrichtung nach irgendeinem vorherigen Anspruch, bei welcher der Deckel mit einem oder mehreren Sichtfenstern (4a, 6a) versehen ist, die eine Beobachtung des Innern des Kammersystems während der Prüfung erlauben.

## Revendications

1. Appareil (10) permettant de tester l'intégrité d'un système de chambre d'accès (24) pendant ou après son installation, l'appareil comprenant un couvercle (4, 6) pliable, portable pour réaliser le raccordement sensiblement étanche au fluide avec n'importe quelle partie du système de chambre, des moyens d'évacuation à distance pour évacuer l'air dans le système de chambre afin de proposer un vide à l'intérieur, et des moyens de contrôle de vide pour contrôler le niveau de vide sur une période de temps prédéterminée, les moyens d'évacuation et les moyens de contrôle de vide étant raccordés au couvercle au moyen de tuyaux flexibles via un oritice situé dans le couvercle.

2. Appareil selon la revendication 1, dans lequel l'appareil comprend également des moyens (40) pour utiliser l'information de contrôle de vide afin de déterminer une vitesse d'amenuisement de vide, afin de comparer ladite vitesse d'amenuisement avec des données obtenues à partir de tests empiriques et afin de déterminer, suite à cette comparaison, au moins s'il existe ou pas de fuite.

3. Appareil selon la revendication 1, dans lequel l'appareil comprend également des moyens (50, 40) pour sélectionner l'une des nombreuses différentes profondeurs de la chambre, correspondant chacune à un niveau différent de vide et le temps de contrôle correspondant.

4. Appareil selon l'une quelconque des revendications précédentes, dans lequel l'appareil comprend également un microprocesseur (40) dédié.

5. Appareil selon la revendication 4, dans lequel les moyens de contrôle de vide comprennent un capteur de vide adapté pour retransmettre l'information au microprocesseur (40) dédié.

6. Appareil selon la revendication 4 ou la revendication 5, dans lequel le microprocesseur est programmé pour détecter une détaillance à atteindre le niveau de vide prédéterminé.

7. Appareil selon l'une quelconque des revendications précédentes, comprenant une interface utilisateur (42) se présentant sous la forme d'un panneau d'indication visuelle (54) pour afficher les résultats des moyens de contrôle de vide.

8. Appareil selon l'une quelconque des revendications précédentes, dans lequel le couvercle (4, 6) est labriqué dans une gamme de différentes tailles pour s'adapter aux différentes installations de chambre d'accés.

9. Appareil selon l'une quelconque des revendications précédentes, dans lequel le couvercle (5) est formé d'un seul tenant.

10. Appareil selon l'une quelconque des revendications 1 à 9, dans lequel le couvercle comprend deux panneaux (4, 6) chacun étant articulé au moyen de charnières (8) sur un élément central (2), de sorte que les panneaux peuvent chacun être pivotés autour d'un axe respectif s'étendant parallèlement à l'axe longitudinal de l'élément central, entre une position rentrée dans laquelle les deux panneaux sont face à face et une position opérationnelle dans laquelle les deux panneaux sont adjacents dans un même plan.

11. Appareil selon la revendication 10, dans lequel l'élément central comprend également des moyens formant poignée (2a).

12. Appareil selon les revendications 10 ou 11, dans lequel les charnières sont des charnières (8) de piano classiques.

13. Appareil selon l'une quelconque des revendications 10 à 12, dans lequel le couvercle comprend également des moyens formant joint d'étanchéité (11, 12) comprenant deux joints d'étanchéité séparés, un premier joint d'étanchéité (12) qui s'étend autour de la périphérie du couvercle pour former un joint d'étanchéité avec le bord supérieur du système de chambre d'accès et un second joint d'étanchéité (11) dans la région des charnières entre l'élément central et les panneaux adjacents.

14. Appareil selon l'une quelconque des revendications précédentes, dans lequel le couvercle est monté avec une ou plusieurs fenétres d'observation (4a, 6a) qui permettent d'observer l'intérieur du système de chambre pendant le test.
